# DEMANDE DE BREVET EUROPEEN

(11) **EP 1 001 559 A1**
(43) Date de publication de la demande: **17.05.2000**
(21) Numéro de dépôt: 99402451.1
(22) Date de dépôt: 07.10.1999
(51) Int. Cl.: H04B 7/212

(54) **Allocation des ressources radio sur la liaison montante d'un système de télécommunication**

(30) Priorité: 16.11.1998 FR 9814332
(71) Demandeur: ALCATEL, 75008 Paris (FR)
(72) Inventeur: Dieudonne, Marc, 91430 Igny (FR)
(74) Mandataire: Sciaux, Edmond

(57) **Abrégé**

L'invention propose, pour l'allocation des ressources radio dans un système de télécommunications par voie hertzienne en mode paquets et en accès multiple à division temporelle, de prévoir dans chaque station distante une table (7, 8) dans laquelle sont stockées, pour une trame, les autorisations d'émission pour chaque intervalle de temps. Les paquets sont stockés dans une pluralité de files d'attente dans chaque station distante.

La table est dédoublée, de sorte qu'une table est lue pendant une trame, tandis que l'autre table est écrite.

## Description

La présente invention concerne le domaine des télécommunications par voie hertzienne en mode paquets, et plus particulièrement l'allocation des ressources radio sur la liaison montante dans un système de télécommunication par voie hertzienne.

Dans un système de télécommunications par voie hertzienne se pose sur la liaison montante le problème de l'allocation des ressources radio, entre les différentes station distantes, autrement dit la gestion de l'accès multiple. Pour la liaison descendante, i. e. depuis la station de base ou "gateway" en langue anglaise vers les stations distantes, ce problème ne se pose pas. Pour la liaison montante, i. e. depuis des différentes stations distantes vers la station de base, il est nécessaire d'arbitrer l'utilisation des ressources radio entre les différentes station distantes.

Deux solutions à ce problème existent. On peut d'une part gérer l'accès multiple en détectant les collisions. Dans un tel type de protocole, les station distantes émettent, sans qu'aucun synchronisme ne soit requis, et un élément d'information n'est correctement transmis que si une seule station distante est émettrice à un instant donné; ce type de protocole ne peut valablement reposer que sur une ressource radio partagée peu coûteuse car largement surdimensionnée.

On peut aussi synchroniser l'accès des différentes stations distantes à la ressource radio commune, grâce à une fonction d'affectation des requêtes pour l'accès multiple (DAMA ou "dynamic allocation multiple access"). Ce type de protocole est par exemple décrit dans Argagnon C. et al., ANIS or Providing multimedia services via satellites, though effective use of standards, IAF'98, Melbourne.

US-A-5 327 432 pose aussi le problème de l'allocation des intervalles de temps à différentes station distantes d'un système de radiocommunications à accès multiple par division temporelle. La solution proposée dans ce document est de prévoir un message d'allocation transmis par la station de base, qui est traité dans une station distante par un circuit de segmentation des messages. Ce document traite plus particulièrement du protocole d'allocation des intervalles de temps.

US-A-5 363 374 décrit un procédé d'allocation de ressources par anticipation; pour réduire le temps nécessaire à l'allocation des ressources, ce document propose de transmettre la demande de réservation de ressources, avant même de connaître le nombre total de ressources requises.

Le document EP 0.484.387 décrit un procédé consistant à tenir à jour dans une station de base, une liste des stations distantes qui demandent actuellement à émettre des paquets d'un type donné et d'une longueur donnée. La station de base détermine l'attribution d'intervalles temporels à certaines station distantes, et émet une trame qui indique les intervalles attribués, pour émettre des paquets dans la trame suivante. Les intervalles attribués sont définis par les positions respectives, dans la trame, des identités des station distantes qui vont être autorisées à émettre.

Le but de l'invention est d'améliorer ces procédès connus.

Plus précisément, l'invention propose un procédé d'allocation des ressources radio sur la voie montante dans un système de télécommunication par voie hertzienne en mode paquets et en accès multiple par division temporelle, comprenant au moins une station de base et une pluralité de station distantes ; dans lequel chaque station distante comprend des moyens pour stocker des paquets à émettre ; ce procédé consistant à :
- émettre par une station de base, et écrire, dans au moins une table dans chaque station distante, pendant une trame, des autorisations d'émission pour une trame suivante, les autorisations d'émission comprenant l'identification d'une station distante autorisée à émettre pendant ledit intervalle ;
- lire des autorisations d'émissions, par chaque station distante, pendant ladite trame suivante, dans ladite table ;
- émettre des paquets stockés par chaque station distante, pendant ladite trame suivante, en fonction des autorisations d'émission ainsi lues ;
**caractérisé** en ce qu'il consiste à :
- stocker les paquets à émettre à partir d'une station distante, dans une pluralité de files d'attente ;
- et mentionner dans les autorisations d'émission, pour chaque intervalle de temps d'une trame, les identités des files d'attente d'une station distante.

L'invention propose aussi une station distante d'un système de télécommunication par voie hertzienne en mode paquets et en accès multiple, pour la mise en oeuvre de ce procédé.

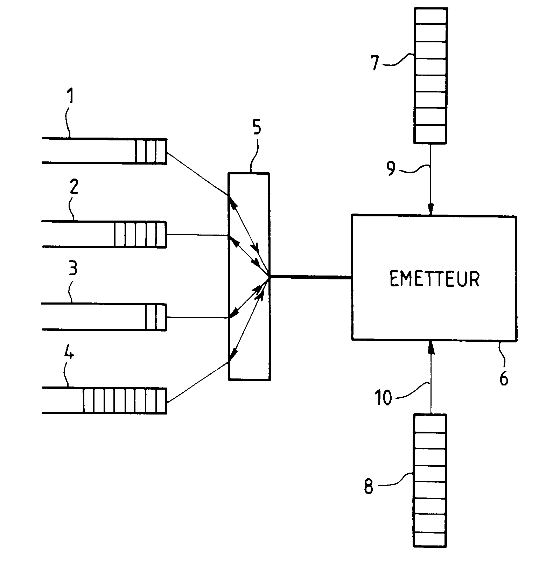

D'autres caractéristiques et avantages de l'invention apparaîtront à la lecture de la description qui suit de modes de réalisation de l'invention, donnée à titre d'exemple et en référence aux dessins annexés, dont la figure unique montre une représentation schématique d'une partie d'une station distante mettant en oeuvre l'invention.

Dans la suite, l'invention est décrite en référence à un système de télécommunications par satellite en ATM (acronyme de l'anglais "Asynchronous Transfer Mode" ou mode de transfert asynchrone). On note T la période de la trame montante, qui est séparée en K intervalles de temps; dans l'exemple chacun des K intervalles de temps ou "slots" correspond à une cellule ATM.

L'invention propose de munir chaque station distante de N mémoires ou tables de K places, correspondant aux K cellules possibles à envoyer pendant la période de la trame montante, avec N un entier au moins égal à deux. Pendant une période de trame, les station distantes émettent pendant les K intervalles de temps en fonction du contenu de l'une des mémoires; l'autre mémoire est mise à jour pour la trame suivante, en fonction des requêtes des différentes station distantes.

La figure montre une représentation schématique d'une partie d'une station distante mettant en oeuvre l'invention. On reconnaît sur la figure différentes files d'attentes 1 à 4 de la station distante, qui contiennent les cellules à envoyer. Les sorties des différentes files d'attente sont envoyées vers un multiplexeur 5, qui sélectionne les cellules à envoyer en fonction des règles de priorité propres à chaque système; le mécanisme de sélection des cellules des différentes files d'attente, comme le mécanisme de gestion des débordements des files d'attente est indifférent pour l'invention et n'est pas plus décrit. Les cellules fournies par le multiplexeur sont émises par la station distante, comme symbolisé par l'émetteur 6.

La station distante comprend en outre deux tables ou mémoires 7 et 8, qui présentent chacune K places. Les tables 7 et 8 sont lues et écrites alternativement, une table étant lues pendant une période T, pendant que l'autre est écrite avec les informations reçues depuis la station de base.

Pour une trame montante donnée T, une des tables 7 ou 8 des différentes stations distantes sont lues de façon synchrone, sous commande par exemple d'un signal de synchronisation de trame fourni par la station de base. Les tables lues par les différentes cellules contiennent des autorisations d'émission pour les différentes station distantes : chacune des K lignes de la table lue pendant la trame correspond à l'un des K intervalles de temps, et contient au plus une autorisation d'émission d'une cellule pour l'une des station distantes. La lecture des lignes de la table permet donc à une station distante de déterminer pour quel intervalle de temps elle dispose d'une autorisation d'émission. Dans la figure, les flèches 9 et 10 allant respectivement des tables 7 et 8 symbolisent le fait que l'émission d'une cellule par l'émetteur 6 dépend du contenu des tables 7 et 8.

Pendant la lecture d'une table, l'autre table peut être mise à jour sous la commande de la station de base, de sorte à indiquer les autorisations d'émission pour la trame suivante. La mise à jour de la table s'effectue avantageusement en fonction des requêtes transmises par chacune des stations distantes.

L'invention assure de la sorte que pendant un intervalle de temps d'une trame montante, au plus une des stations distantes peut émettre une cellule.

Il est possible que pour une ligne donnée de la table en cours de lecture, i.e. pour un intervalle de temps, aucune instruction d'émission ne soit accordée. Dans un tel cas, on peut choisir de ne pas émettre de signal - aucune des stations distantes n'émettant de cellules. On peut aussi choisir d'émettre une cellule vide, depuis l'une des stations distantes. Dans ce cas, la ligne de la table peut présenter un contenu représentatif de l'absence d'autorisation d'émission d'une cellule active. Le choix de la station distante qui émet la cellule vide peut s'effectuer soit à partir du contenu de la ligne de la table - qui peut contenir le nom de la station distante devant émettre une cellule vide -, soit par une fonction prédéterminée - par exemple, la dernière station distante ayant émis une cellule active doit émettre une cellule vide.

La gestion des priorités selon l'invention peut être effectuée soit au niveau des stations distantes, soit au niveau de la station de base, soit de façon partagée. Ainsi, si les différentes stations distantes transmettent à la station de base des informations représentatives des priorités des cellules contenues dans les différentes files d'attente, les autorisations d'émission dans les tables peuvent indiquer non seulement la station distante pouvant émettre, mais aussi la file d'attente de la station distante dans laquelle doit être prélevée la cellule active à émettre.

A l'inverse, l'invention peut aussi être mise en oeuvre dans un système où les stations distantes ne fournissent à la station de base qu'une indication représentative de la priorité la plus élevée des cellules présentes dans la file d'attente de la station distante. Dans ce cas, l'allocation des cellules dans la trame suivante s'effectue en fonction de cette priorité la plus élevée pour chacune des stations distantes, et la gestion dans une station distante donnée des priorités de rang inférieur s'effectue localement.

Des solutions intermédiaires sont manifestement possibles, en fonction de la nature du schéma de gestion des priorités mis en oeuvre dans un système donné.

Bien entendu, la présente invention n'est pas limitée aux exemples et modes de réalisation décrits et représentés, mais elle est susceptible de nombreuses variantes accessibles à l'homme de l'art. Elle n'est notamment pas limitée à un système en TDMA (accès multiple en division temporelle), mais s'applique à tout système dans lequel les ressources radio doivent être partagées entre différentes stations distantes. Le nombre de tables ou mémoires n'est pas limité à deux, et peut être supérieur; ce peut notamment être le cas si la synchronisation en lecture et en écriture dans les tables rend impossible l'utilisation en lecture d'une table une trame sur deux. On peut dans ce cas prévoir trois tables, qui sont alternativement lues et écrites. L'invention n'est pas limitée à un système dans lequel chaque intervalle de temps d'une trame correspond à une cellule, mais s'applique plus généralement à des intervalles de temps comprenant plus d'une cellule.

## Revendications

1. Un procédé d'allocation des ressources radio sur la voie montante dans un système de télécommunication par voie hertzienne en mode paquets et en accès multiple par division temporelle, comprenant au moins une station de base et une pluralité de stations distantes ; dans lequel chaque station distante comprend des moyens pour stocker des paquets à émettre ;
ce procédé consistant à :
- émettre par une station de base, et écrire, dans au moins une table dans chaque station distante, pendant une trame, des autorisations d'émission pour une trame suivante, les autorisations d'émission comprenant l'identification d'une station distante autorisée à émettre pendant ledit intervalle ;
- lire des autorisations d'émissions, par chaque station distante, pendant ladite trame suivante, dans ladite table ;
- émettre des paquets stockés par chaque station distante, pendant ladite trame suivante, en fonction des autorisations d'émission ainsi lues ;
**caractérisé** en ce qu'il consiste à :
- stocker les paquets à émettre à partir d'une station distante, dans une pluralité de files d'attente (1-4) ;
- et mentionner dans les autorisations d'émission, pour chaque intervalle de temps d'une trame, les identités des files d'attente d'une station distante.

2. Procédé de la revendication 1, **caractérisé** en ce qu'il consiste en outre à dédoubler ladite table en deux tables, et à écrire simultanément dans une première table pendant que la seconde table est lue, au cours d'une même trame.

3. Une station d'un système de système de télécommunication par voie hertzienne en mode paquets et en accès multiple par division temporelle, comprenant:
- des moyens (1-4) pour stocker des paquets à émettre ;
- des moyens (7, 8) pour recevoir et mémoriser des autorisations d'émission de paquets ;
- des moyens (5, 6) pour émettre des paquets stockés, choisis en fonction des autorisations d'émission de paquets ;
**caractérisée** en ce que les moyens (1-4) pour stocker des paquets à émettre comportent une pluralité de files d'attente (1-4), et en ce que moyens (7, 8) pour recevoir et mémoriser des autorisations d'émission de paquets sont aptes à contenir des autorisations d'émission comprenant l'identification d'une file d'attente de cette station.

4. Station selon la revendication 3, **caractérisée** en ce que les moyens pour recevoir et mémoriser des autorisations d'émission de paquets comportent au moins deux tables (7, 8) et des moyens pour lire une table et des moyens pour écrire une autre table simultanément pendant une même trame.
